(19) Europäisches Patentamt
European Patent Office
Office européen des brevets

(11) **EP 2 302 328 B1**

(12) **EUROPÄISCHE PATENTSCHRIFT**

(45) Veröffentlichungstag und Bekanntmachung des Hinweises auf die Patenterteilung:
**24.09.2014 Patentblatt 2014/39**

(51) Int Cl.:
***G01D 5/20*** *(2006.01)*

(21) Anmeldenummer: **10006074.8**

(22) Anmeldetag: **11.06.2010**

(54) **Positionsmesseinrichtung mit sich mehrfach kreuzender Senderwindungsanordnung**

Positioning device with multiple crossing transmitter coil assembly

Couplage d'aimant permanent avec un sensemble de bobines émettrices qui se croisent plusieurs fois

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **24.09.2009 DE 102009042940**

(43) Veröffentlichungstag der Anmeldung:
**30.03.2011 Patentblatt 2011/13**

(73) Patentinhaber: **Robert Bosch GmbH**
**70469 Stuttgart (DE)**

(72) Erfinder: **Reusing, Günter, Dr.**
**97464 Niederwerrn (DE)**

(74) Vertreter: **Maiß, Harald et al**
**Bosch Rexroth AG**
**Patentabteilung**
**Ernst-Sachs-Straße 100**
**97424 Schweinfurt (DE)**

(56) Entgegenhaltungen:
**EP-A2- 0 743 508    JP-A- 11 006 708**

**Beschreibung**

Die Erfindung betrifft eine Positionsmesseinrichtung gemäß dem Oberbegriff von Anspruch 1.

Aus der EP 1 164 358 B1 ist eine Positionsmesseinrichtung bekannt. Gemäß der Figur 29 der EP 1 164 358 B1 umfasst die Positionsmesseinrichtung eine sich in eine Messrichtung erstreckende Maßverkörperung und eine Abtastvorrichtung, die in einer Messrichtung beweglich gegenüber der Maßverkörperung ist. Die Abtastvorrichtung umfasst eine Senderwindungsanordnung E1; E2;... und eine Empfängerwindungsanordnung S1+, S1-; C1+; C1-;... . Die beiden Windungsanordnungen sind in mehreren Schichten angeordnet, die im Dünnschichtverfahren hergestellt sind. Man spricht daher auch von planaren Spulenstrukturen. Die Sender- und die Empfängerwindungsanordnung besteht aus mehreren im Wesentlichen identischen Einzelelementen, die in periodischen Abständen entlang der Messrichtung angeordnet sind.

Die Maßverkörperung besteht aus einem elektrisch leitfähigen Metallstab, der mit einer Vielzahl von in periodischen Abständen angeordneten Vertiefungen ausgestattet ist, die durch erhöhte Abschnitte getrennt sind. In die Senderwindungsanordnung wird ein Wechselstrom eingespeist, der vor allem in den Erhöhungen der Maßverkörperung Ströme induziert, die das elektromagnetische Wechselfeld der Senderwindungsanordnung je nach Stellung der Abtastvorrichtung gegenüber der Maßverkörperung unterschiedlich beeinflussen. Durch das genannte elektromagnetische Wechselfeld wird in der Empfängerwindungsanordnung eine Wechselspannung induziert, die abhängig von der Stellung der Maßverkörperung gegenüber der Abtastvorrichtung ist.

Die Empfängerwindungsanordnung besteht aus zwei Gruppen von Spulen, nämlich einer Sinus- und einer Cosinus-Gruppe, die jeweils ein gesondertes Abtastsignal liefern. Durch Auswertung der beiden Signale lässt sich die Stellung der Abtastvorrichtung gegenüber der Maßverkörperung innerhalb einer Periode der Maßverkörperung eindeutig bestimmen.

Die Fig. 3 der EP 1 164 358 B1 zeigt ein Einzelelement der Sender- und der Empfängerwindungsanordnung. Das Einzelelement besteht aus einer planaren, spiralförmigen Senderspule 31, die eine Senderfläche umgrenzt. In der Senderfläche sind insgesamt zwei Paare von differentiell zusammen geschalteten spiralförmigen Empfängerspulen vorgesehen. Durch die genannte Differenzschaltung soll erreicht werden, dass das Messergebnis nicht durch äußere Störfelder gestört wird. Zu diesem Zweck müssen die beiden Spulen eines Paares im Wesentlichen geometrisch gleich, aber mit entgegen gesetztem Windungssinn ausgeführt sein, wobei sie in Form einer elektrischen Reihenschaltung miteinander verbunden sind. Das äußere Störfeld induziert damit in den beiden benachbarten Spulen, die gleiche Spannung jedoch mit entgegen gesetztem Vorzeichen. Durch die Reihenschaltung löschen sich die beiden Induktionsspannungen gegenseitig aus. Die Abtastvorrichtung ist damit weitgehend unempfindlich gegen äußere Störfelder.

Alle Empfängerspulen einer Gruppe sind jeweils in Reihe zusammengeschaltet, damit sich ein möglichst starkes Abtastsignal ergibt. Hinsichtlich der Senderspulen wäre ebenfalls eine Reihenschaltung zu bevorzugen, damit alle Senderspulen vom gleichen Strom durchflossen werden. Es hat sich aber gezeigt, dass der Gesamtwiderstand der Senderwindungsanordnung dadurch so groß wird, dass bei Verwendung von üblichen Speisespannungen in der Größenordnung von einigen Volt nur kleine Ströme in der Senderwindungsanordnung fließen, so dass nur ein sehr schwaches elektromagnetisches Wechselfeld erzeugt wird. Die Empfindlichkeit der Abtastvorrichtung ist entsprechend gering. Man hat sich daher entschlossen, die Sendespulen parallel zu schalten, so dass sich die Empfindlichkeit deutlich erhöht. Dies hat wiederum den Nachteil, dass die Sendespulen nicht alle zwangsweise mit der gleichen Stromstärke durchflossen werden. In der Folge liefern die Einzelelemente der Windungsanordnung unterschiedliche Signalstärken, was das Messergebnis verfälscht. Insbesondere sind das Sinus- und das Cosinus-Signal mit einem sogenannten Offset behaftet. Ursächlich für die unterschiedlichen Stromstärken in den einzelnen Senderspulen sind die unterschiedlichen Widerstände der genannten Einzelspulen. Dieser ist wiederum auf die Herstellung der Spulen in einem Dünnschichtverfahren zurückzuführen, bei der insbesondere die Breite der Leiterbahnen mit einer erheblichen Fertigungstoleranz behaftet ist. Eine weitere Ursache ist die unterschiedliche Länge der Versorgungsleiterbahnen der Sendespulen.

Aus der US 5804963 A, namentlich aus der Ausführungsform gemäß der Fig. 4 der US 5804963 A, sind sogenannte Mäanderwindungen bekannt. Die genannte Ausführungsform umfasst insgesamt drei derartige Mäanderwindung, die jeweils eine Leiterbahn mit einem einzigen Windungsumlauf aufweisen, wobei sich die Leiterbahn mehrfach selbst kreuzt. Derartige Mäanderwindungen werden bevorzugt in Verbindung mit Maßverkörperungen verwendet, die eine sehr kleine Periodenlänge aufweisen. Dabei erstreckt sich die Mäanderwindung über eine große Zahl von Teilungsperioden, damit in dem einen einzigen Windungsumlauf eine genügend große Spannung induziert wird. Der besondere Vorteil der Mäanderwindung liegt darin, dass mehrere Mäanderwindungen überlappend angeordnet werden können, wobei nur zwei Leiterbahnebenen erforderlich sind, um die Kreuzungsstellen zu realisieren.

Die Aufgabe der Erfindung besteht darin, die Senderwindungsanordnung dahingehend zu verbessern, dass deren elektrischer Widerstand nahezu beliebig eingestellt werden kann, wobei gleichzeitig gewährleistet ist, dass alle Senderflächen einem im Wesentlichen identischen elektromagnetischen Wechselfeld ausgesetzt sind.

Gemäß dem selbständigen Anspruch wird diese Aufgabe dadurch gelöst, dass die Senderwindungsanordnung eine erste und eine zweite Gruppe mit mehreren Senderleiterbahnen aufweist, wobei die Senderleiterbahnen einer Gruppe jeweils schlangenlinienartig in einer Ebene mit geringem Abstand parallel zueinander verlaufen, wobei sich die Senderleiterbahnen der beiden Gruppen derart kreuzen, dass sie die Senderflächen begrenzen, wobei zwischen zwei Kreuzungsstellen jeweils eine einzige Senderfläche angeordnet ist. Da sich eine Senderleiterbahn um alle Senderflächen herum erstreckt, werden alle Senderflächen vom gleichen Strom umflossen, damit sind alle Senderflächen einem im Wesentlichen identischen Magnetfeld ausgesetzt. Da alle Senderleiterbahnen mit geringem Abstand parallel zueinander angeordnet sind, kommt es nicht darauf an, ob in allen Senderleiterbahnen der gleiche Strom fließt. Die Senderleiterbahnen können damit beliebig zusammengeschaltet werden, ohne dass hierdurch die Gleichförmigkeit des Senderfeldes beeinflusst wird. Damit ist es möglich, den Widerstand der Senderwindungsanordnung nahezu beliebig einzustellen. Mit der vorgeschlagenen Anordnung kann jede Senderfläche mit einer beliebig großen Anzahl von Windungen umgeben werden, so dass das Sendfeld auf jede gewünschte Stärke eingestellt werden kann. Hierin unterscheidet sich die vorliegende Erfindung von der Meanderwindung der US 5804963 A, bei der jede Meanderfläche nur von einer einzigen Windung umgeben ist.

In den abhängigen Ansprüchen sind vorteilhafte Weiterbildungen und Verbesserungen der Erfindung angegeben.

Jeweils eine Senderleiterbahn der ersten und der zweiten Gruppe kann am Ende leitend zu einer Senderleiterbahnwindung verbunden sein, wobei wenigstens zwei Senderleiterbahnwindungen parallel geschaltet sind, wobei wenigstens zwei Senderleiterbahnwindungen in Reihe geschaltet sind. Die Reihen- und die Parallelschaltung ist die einfachste Möglichkeit der Zusammenschaltung der Senderleiterbahnwindungen, die sich überdies im Dünnschichtverfahren problemlos herstellen lässt. Durch geeignete Kombinationen von Reihen- und Parallelschaltung lässt sich der Widerstand der Senderwindungsanordnung auf den gewünschten Wert einstellen. Der genannten Verbindungsstelle zwischen den beiden genannten Sendlerleiterbahnen kann als Kreuzungsstelle im Sinne des Hauptanspruch verstanden werden. In diesem Fall sind vorzugsweise alle Senderflächen zwischen zwei Kreuzungspunkten angeordnet.

Es können mehrere Empfängerspulenpaare vorgesehen sein, wobei in jeder Senderfläche höchstens ein Empfängerspulenpaar angeordnet ist. Damit soll erreicht werden, dass jedes Empfängerspulenpaar möglichst nah an dem zugeordneten Abschnitt der Empfängerwindungsordnungen angeordnet ist, so dass es einem möglichst starken Senderfeld ausgesetzt ist. Die vorgeschlagene Abtastvorrichtung besitzt damit eine hohe Empfindlichkeit.

Vorzugsweise sind in den Senderflächen an beiden Enden der Senderspulenanordnungen keine Empfängerspulenpaare angeordnet. Das Senderfeld, das auf die Sendeflächen am Ende der Senderspulenanordnungen einwirkt, unterscheidet sich aufgrund von sogenannten Randeffekten vom Senderfeld, das auf die Senderflächen in der Mitte der Senderwindungsanordnung einwirkt. Der genannte Randeffekt ist an der letzten Senderfläche der Senderwindungsanordnung besonders ausgeprägt, wobei er an der vorletzten Senderfläche bereits deutlich abgeschwächt ist. An den übrigen Senderflächen macht sich der Randeffekt kaum mehr bemerkbar, so dass diese ohne weiteres mit Empfängerspulenpaaren bestückt werden können, ohne dass es zu einer Verfälschung des Abtastsignals kommt.

Es können wenigstens zwei Gruppen von Empfängerspulenpaaren vorgesehen sein, wobei alle Empfängerspulenpaare einer Gruppe in Reihe geschaltet sind. Mit den beiden Gruppen von Empfängerspulenpaaren sollen zwei gesonderte Abtastsignale bereitgestellt werden, die um 90° phasenversetzt sind. Man spricht auch von einer Sinus- und einer Cosinus-Gruppe. Durch die Reihenschaltung der Empfängerspulenpaare addieren sich deren Signalspannungen, so dass sich ein besonders starkes Abtastsignal ergibt. Gleichzeitig mitteln sich durch die Addition die Signalfehler der einzelnen Empfängerspulenpaare aus, so dass die Abtastgenauigkeit steigt. Dieser Ausmittelungseffekt beruht darauf, dass die Abtastfehler der Einzelspulen mit hoher Wahrscheinlichkeit untereinander verschieden sind, so dass sie sich bei Verwendung einer möglichst hohen Anzahl an Empfängerspulenpaaren weitgehend ausmitteln.

Es können genau zwei Gruppen von Empfängerspulenpaaren vorgesehen sein, wobei die Empfängerspulenpaare der beiden Gruppen in Messrichtung abwechselnd angeordnet sind, und wenn die Periodenlänge der Maßverkörperung mit p und die Periodenlänge der Senderwindungsanordnung mit q bezeichnet wird, wobei der Zusammenhang

$$q = n \times p + m \times p/4$$

besteht, wobei n eine ganze Zahl ist, für die gilt n $\geq$ 1, und wobei m eine ungerade ganze Zahl ist, für die gilt m $\geq$ 1. Bei dieser Ausgestaltung ergeben sich zwei um 90° phasenversetzte Signale. Da die Empfängerspulenpaare der beiden Gruppen in Messrichtung abwechselnd angeordnet sind, unterliegen beide Gruppen den im Wesentlichen gleichen Abtastfehlern, so dass diese bei der Signalauswertung wenig stören. Je nach Auswahl der Parameter muss bei der Reihenschaltung der Empfängerspulenpaare einer Gruppe darauf geachtet werden, dass die Windungs- bzw. Stromlaufrichtung zweier benachbarter Einzelspulenpaare einer Gruppe gleich oder entgegengesetzt gerichtet ist.

Vorzugsweise sind alle Senderflächen untereinander im Wesentlichen gleich ausgeführt, wobei die Empfängerspulenpaare ebenfalls untereinander im Wesentlichen gleich ausgeführt sind. Bei dieser Ausgestaltung ist der bereits angesprochene Ausmittlungseffekt bei Verwendung mehrerer Empfängerspulenpaare besonders ausgeprägt. Die entsprechende Positionsmesseinrichtung besitzt daher eine hohe Messgenauigkeit.

Die Senderflächen können im Wesentlichen rechteckig ausgeführt sein, wobei die kurze Rechteckseite in Messrichtung angeordnet ist. Durch die Rechteckform wird auf einer vorgegebenen Messfläche ein besonders großer Flächenanteil als aktive Messfläche ausgenutzt, so dass die Positionsmessvorrichtung eine hohe Empfindlichkeit besitzt. Die kurze Rechteckseite ist in Messrichtung angeordnet, damit eine Maßverkörperung mit besonders kleiner Periodenlänge verwendet werden kann. Dadurch steigt die Genauigkeit der Positionsmessvorrichtung.

Die beiden Spulen eines Empfängerspulenpaares können im Wesentlichen rechteckig ausgeführt und unmittelbar nebeneinander angeordnet sein, wobei die kurzen Rechteckseiten in Messrichtung fluchtend verlaufen. Durch die Rechteckform wird auf einer vorgegebenen Messfläche ein besonders großer Flächenanteil als aktive Messfläche ausgenutzt, so dass die Positionsmessvorrichtung eine hohe Empfindlichkeit besitzt. Hierbei ist es besonders vorteilhaft, wenn sowohl die Senderflächen als auch die Empfängerspulen rechteckig sind. Die vorgeschlagene relative Anordnung der beiden Empfängerspulen bewirkt eine besonders effiziente Störungsunterdrückung im Rahmen der Differenzschaltung.

Die Sender- und die Empfängerwindungsanordnung kann in mehreren elektrisch voneinander isolierten Schichten angeordnet sein, wobei die erste und die zweite Gruppe von schlangenlinienartigen Senderleiterbahnen jeweils in wenigstens einer gesonderten Schicht angeordnet sind. Eine derartige Abtastvorrichtung lässt sich besonders leicht im Dünnschichtverfahren herstellen, da nur sehr wenige Schichten mit Leiterbahnen erforderlich sind. Im einfachsten Fall reichen zwei Schichten mit Leiterbahnen aus.

Die Anzahl der notwendigen Schichten ist besonders gering, wenn die Empfängerspulenpaare über Verbindungsleiterbahnen miteinander zusammengeschaltet sind, wobei die Verbindungsleiterbahnen in der selben Schicht angeordnet sind, wie eine der Gruppen von schlangenlinienartigen Senderleiterbahnen. Hierbei ist anzumerken, dass es gerade durch die Schlangenlinienform der Leiterbahnen der Senderwindungsanordnung möglich wird, die genannten Verbindungsleiterbahnen kreuzungsfrei in der gleichen Schicht zu verlegen.

Die Anzahl der notwendigen Schichten ist noch geringer, wenn wenigstens ein Empfängerspulenpaar in derselben Schicht angeordnet ist wie die andere Gruppe von schlangenlinienartigen Senderleiterbahnen. Hierbei ist anzumerken, dass die Empfängerspulenpaare vorzugsweise über mehrere Schichten verteilt angeordnet werden, damit eine besonders große Windungszahl und damit eine besonders große Empfindlichkeit der Abtastvorrichtung realisiert werden kann.

Die Maßverkörperung wird aus Kostengründen vorzugsweise von einem Metallband gebildet, das mit einer Vielzahl von periodisch angeordneten Durchbrüchen oder Ausnehmungen versehen ist. Es versteht sich jedoch von selbst, dass die erfindungsgemäße Abtastvorrichtung auch zusammen mit jeder anderen Maßverkörperung zusammenarbeitet, die sich in Messrichtung periodisch ändernde elektromagnetische Eigenschaften aufweist, welche dazu geeignet sind, die induktive Kopplung zwischen der Senderwindungsanordnung und der Empfängerwindungsanordnung zu ändern, wenn sich die Abtastvorrichtung gegenüber der Maßverkörperung in Messrichtung bewegt. Insbesondere kann die erfindungsgemäße Abtastvorrichtung in Verbindung mit jeder Maßverkörperung verwendet werden, die bereits in der EP 1 164 358 B1 vorgeschlagen wurde. Dabei kann es sich sowohl um lineare Maßverkörperungen handeln, bei denen die Messrichtung entlang einer Geraden verläuft, aber auch um rotative Maßverkörperungen, bei denen die Messrichtung entlang eines Kreises verläuft. Darüber hinaus kann die Messrichtung auch entlang einer beliebig gewundenen Kurve verlaufen.

Die Erfindung wird im Folgenden anhand der beigefügten Zeichnungen näher erläutert. Es stellt dar:

Fig. 1 eine Draufsicht einer erfindungsgemäßen Maßverkörperung;

Fig. 2 eine Draufsicht einer erfindungsgemäßen Empfängerwindungsanordnung;

Fig. 3 eine Draufsicht der einen Hälfte einer erfindungsgemäßen Senderwindungsanordnung und der Verbindungsleiterbahnen der Senderwindungsanordnung in einer Schicht der Abtastvorrichtung;

Fig. 4 eine Draufsicht der anderen Hälfte einer erfindungsgemäßen Senderwindungsanordnung in einer anderen Schicht der Abtastvorrichtung;

Fig. 5 eine grobschematische Darstellung des Feldes um die Senderwindungsanordnung, betrachtet im Längsschnitt; und

Fig. 6 einen Längsschnitt einer erfindungsgemäßen Positionsmessvorrichtung.

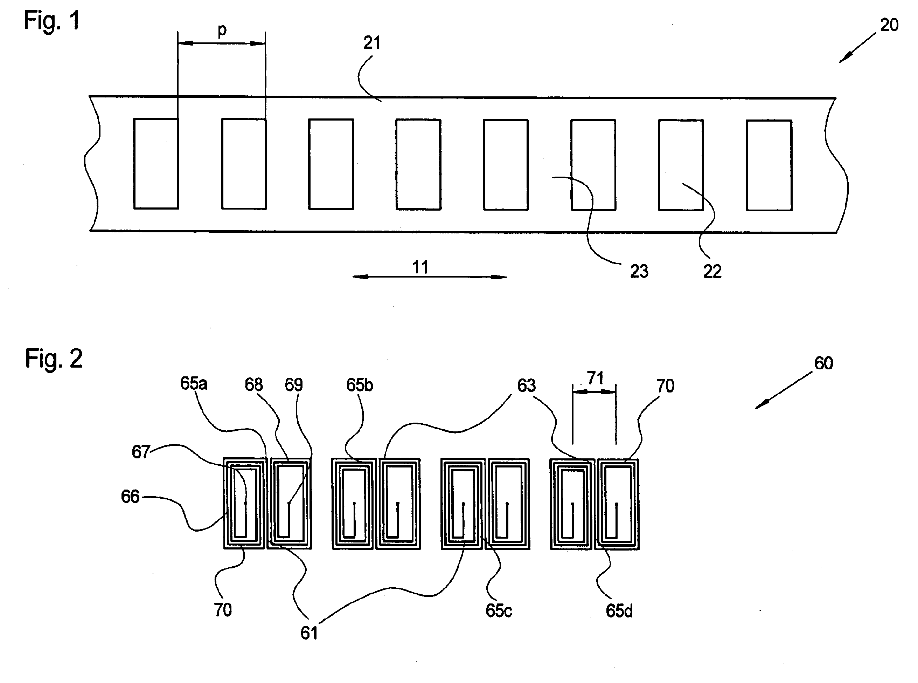

Die Figuren 1 bis 4 zeigen die wesentlichen Bestandteile einer erfindungsgemäßen Positionsmesseinrichtung 10. Die genannten Figuren sind alle im gleichen Maßstab gezeichnet, so dass sich insbesondere alle Durchkontaktierungen 54a - 54h; 67; 69 der verschiedenen Leiterbahnen decken, wenn man die Figuren übereinander legt. Alle Durchkontaktierungen 67; 69; 54a - 54h, die elektrisch leitend miteinander verbunden sind, sind in allen Figuren mit dem gleichen Bezugszeichen versehen.

Fig. 1 zeigt die Maßverkörperung 20 in Form eines Metallbandes 21 aus nichtmagnetischem Stahl. Das Metallband 21 ist mit einer Vielzahl von identischen, rechteckigen Durchbrüchen 22 versehen, die mit einer konstanten Periodenlänge p entlang der Messrichtung 11 verteilt angeordnet sind. Die Breite der Stege 23 zwischen den Durchbrüchen 22 ist gleich der Breite der rechteckigen Durchbrüche 22 und beträgt beispielsweise 0,5 mm, so dass sich eine Periodenlänge p von 1,0 mm ergibt. Die Höhe der rechteckigen Durchbrüche beträgt beispielsweise 7 mm. Die Maßverkörperung 20 wird vorzugsweise in einem photochemischen Ätzverfahren hergestellt, so dass die Periodenlänge p besonders genau ausgeführt werden kann.

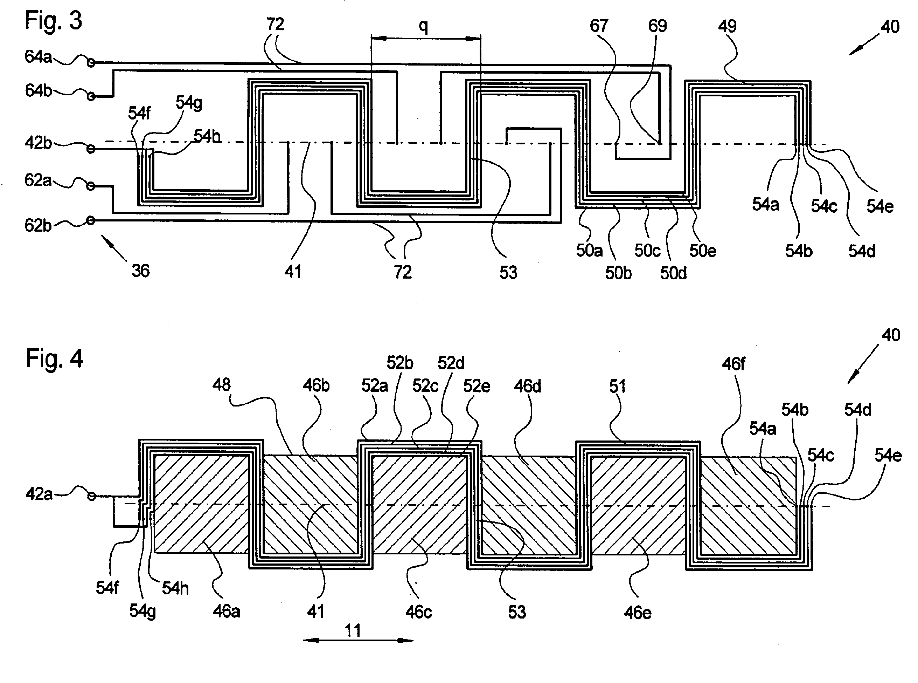

Fig. 2 zeigt die Empfängerwindungsanordnung 60. Die Empfängerwindungsanordnung 60 ist der Übersichtlichkeit halber in einer gesonderten Figur dargestellt, obgleich sie im vorliegenden Ausführungsbeispiel in der gleichen Schicht der Abtastvorrichtung angeordnet ist, wie der in Fig. 4 dargestellte Teil der Senderwindungsanordnung. Die Empfängerwindungsanordnung 60 besteht aus insgesamt vier identischen Empfängerspulenpaaren 65a - 65d, wobei klar ist, dass die Genauigkeit der Positionsmessvorrichtung mit zunehmender Anzahl an Empfängerspulenpaaren steigt.

Bewährt hat sich beispielsweise eine Abtastvorrichtung mit zwölf Empfängerspulenpaaren.

Jedes Empfängerspulenpaar 65a - 65d besteht aus zwei identischen rechteckigen, spiralförmigen Spulen 66; 68. Die beiden Spulen 66; 68 sind unmittelbar nebeneinander angeordnet, wobei deren beide kurzen Rechteckseiten 70 fluchtend ausgerichtet sind. Die beiden Spulen 66; 68 sind in Reihe geschaltet, wobei der Strom in der ersten Spule 66 von der ersten Durchkontaktierung 67 im Inneren der ersten Spule 66 nach außen fließt. In der zweiten Spule 68 fließt der Strom von außen zur zweiten Durchkontaktierung 69 nach innen. Die Fließrichtung des Stromes ist also in beiden Spulen 66; 68 gerade entgegengesetzt. Die Spannungen, die durch ein äußeres Störmagnetfeld in den beiden Spulen 66; 68 induziert werden, löschen sich durch die Reihenschaltung folglich gegenseitig aus. Man spricht daher auch von differentiell geschalteten Spulen.

Ein Vergleich der Figuren 1 und 2 ergibt, dass der Abstand 71 der beiden Spulen 66; 68 eines Empfängerspulenpaares 65a - 65d genau der halben Periodenlänge p der Maßverkörperung entspricht. Das von der Maßverkörperung beeinflusste Magnetfeld der Senderwindungsanordnung, ändert sich daher entlang der Messrichtung mit einer so kurzen Periode, dass die beiden Spulen 66; 68 eines Empfängerspulenpaares 65a - 65d ein deutlich unterschiedliches Magnetfeld erfahren. In den beiden Spulen 66; 68 werden daher unterschiedliche Spannungen induziert, die sich aufgrund der Reihenschaltung der beiden Spulen 66; 68 zu einer von Null verschiedenen Messspannung aufsummieren. Die Breite der Leiterbahnen der Empfängerspulenpaare 65a - 65d beträgt beispielsweise 10 μm, wobei deren Abstand beispielsweise 10 μm beträgt.

Fig. 3 zeigt die erste Gruppe 49 von schlangenlinienartigen Senderleiterbahnen 50a - 50e der Senderwindungsanordnung 40 und die Verbindungsleiterbahnen 72 der Empfängerwindungsanordnung (Nr. 60; Fig. 2). Bezüglich der ersten Gruppe 49 von schlangenlinienartigen Senderleiterbahnen 50a - 50e sind fünf einzelne Senderleiterbahnen gezeigt, die in Form einer rechteckigen Schlangenlinie gewunden sind. Es versteht sich von selbst, dass bei einer praxistauglichen Positionsmessvorrichtung deutlich mehr Senderleiterbahnen vorzusehen sind, wobei sich beispielsweise die Anzahl 48 bewährt hat. Derart viele Senderleiterbahnen müssen allerdings verteilt über mehr als eine Schicht angeordnet werden.

Die schlangenlinienartigen Senderleiterbahnen 50a - 50e begrenzen insgesamt sechs identische Senderflächen 46a - 46f, die in Fig. 4 schraffiert eingezeichnet sind. Ein Vergleich der Figuren 2 und 3 ergibt, dass nur die vier mittleren Senderflächen (Nr. 46b - 46e; Fig. 4) mit einem Empfängerspulenpaar (Nr. 65a - 65d; Fig. 2) versehen sind, wobei die äußeren Senderflächen (Nr. 46a; 46f; Fig. 4) an den beiden Enden der Senderwindungsanordnung 40 leer bleiben. Ein Empfängerspulenpaar füllt dabei die zugeordnete Senderfläche im Wesentlichen vollständig aus.

Die drei schlangenlinienförmigen Senderleiterbahnen 50a - 50c und die zwei schlangenlinienförmigen Sendleiterbahnen 50e; 50f sind jeweils in Reihe geschaltet, wie sich durch Nachverfolgen der entsprechenden Leiterbahnen und der Durchkontaktierungen 54a - 54h in Figur 3 und 4 ergibt. Die beiden genannten Gruppen von Senderleiterbahnen sind wiederum parallel geschaltet, so dass an den Anschlüssen 42a; 42b der Senderwindungsanordnung 40 ein Widerstand anliegt, der bei einer Versorgungsspannung im Bereich von einigen Volt eine ausreichende Stromstärke und damit ein ausreichend starkes Senderfeld ergibt. Bei der Versorgungsspannung handelt es sich um eine Wechselspannung mit einer Frequenz von beispielsweise 300 kHz.

Zu beiden Seiten der schlangenlinienförmigen Senderleiterbahnen 50a - 50e sind Verbindungsleiterbahnen 72 für je eine Gruppe von Empfängerspulenpaaren vorgesehen, namentlich einer Sinus- (Nr. 61; Fig. 2) und einer Cosinus-Gruppe (Nr. 63; Fig. 2). Die Messspannung der Sinus-Gruppe, die an den Anschlüssen 62a; 62b anliegt, weist gegenüber der Messspannung der Cosinus-Gruppe, die an den Anschlüssen 64a; 64b anliegt, eine Phasendifferenz von 90° auf. Die Periodenlänge q der Senderwindungsanordnung 40 beträgt 5/4 der Periodenlänge p der Maßverkörperung, damit die genannte Phasendifferenz entsteht. Hierbei ist anzumerken, dass benachbarte Empfängerspulenpaare (65a; 65c bzw. 65d; 65c; Fig. 2) innerhalb der Sinus- bzw. der Cosinus-Gruppe jeweils mit abwechselnder Polung in Reihe geschaltet sind, damit sich die induzierten Messspannungen vorzeichenrichtig addieren.

Fig. 4 zeigt die zweite Gruppe 51 von schlangenlinienartigen Senderleiterbahnen 52a - 52e, die in einer anderen Schicht als die erste Gruppe (Nr. 49; Fig. 3) angeordnet sind. Die zweite Gruppe 51 von schlangenlinienartigen Senderleiterbahnen 54a - 54e ist im Wesentlichen spiegelbildlich bezüglich der Spiegelachse 41 zur ersten Gruppe ausgeführt, die gleichzeitig die Symmetrieachse der Senderflächen 46a - 46f ist. Unterschiede ergeben sich nur im Anschlussbereich der Senderwindungsanordnung 40, wo die Zusammenschaltung der einzelnen sich selbst kreuzenden Senderleiterbahnen in Reihe oder parallel stattfindet. Die kurze Rechteckseite 48 der Senderflächen 46a - 46f ist in Messrichtung 11 angeordnet.

Eine sich selbst kreuzende Senderleiterbahnwindung wird jeweils aus einer Senderleiterbahn der ersten Gruppe von schlangenformigen Senderleiterbahnen und einer Leiterbahn der zweiten Gruppe von schlangenlinienförmigen Senderleiterbahnen gebildet (z. B. Nr. 50a und Nr. 52a), die über eine Durchkontaktierung (im Beispiel Nr. 54a) elektrisch leitend miteinander verbunden sind. Die Kreuzungsstellen 53 der sich selbst kreuzenden Senderleiterbahnen werden durch die in Figur 3 und 4 senkrecht verlaufenden Abschnitte der schlangenlinienförmigen Senderleiterbahnen (50a - 50e; 52a - 52e) definiert. Demnach befinden sich die mittleren Senderflächen 46b - 46e jeweils zwischen zwei benachbarten Kreuzungsstellen 53.

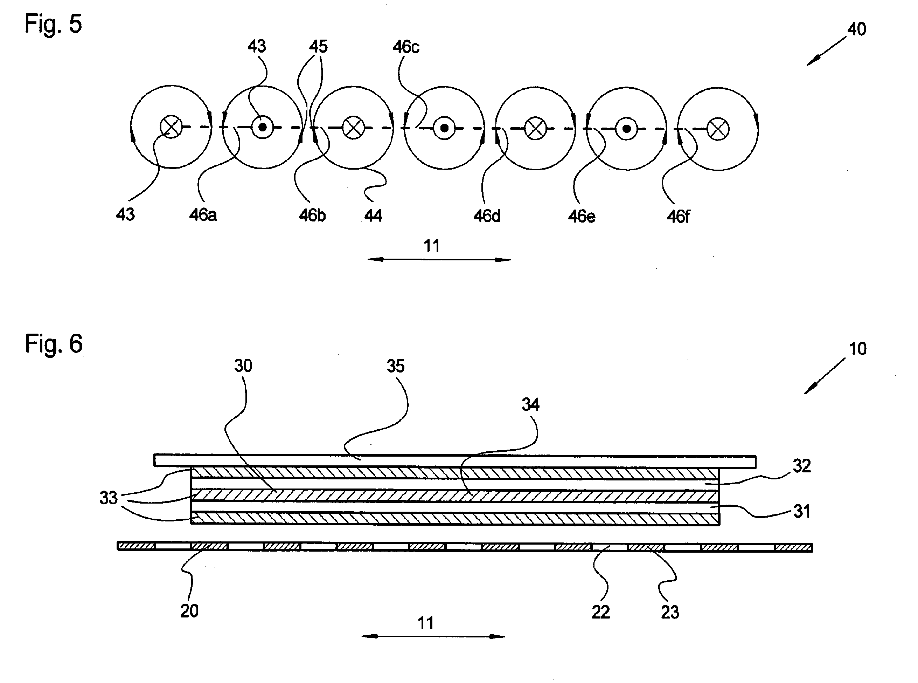

Fig. 5 zeigt in grobschematischer Weise die magnetischen Feldlinien 44, die sich um die Senderwindungsanordnung 40 ausbilden, wobei die Ansichtsebene parallel zur Messrichtung 11 und senkrecht zur ersten bzw. zweiten Schicht (Nr. 31; 32; Fig. 6) verläuft. Hinzuweisen ist insbesondere darauf, dass benachbarte Senderflächen 46a - 46e jeweils eine entgegen gesetzte magnetische Flussrichtung 45 aufweisen, wenn Strom durch die Senderwindungsanordnung 40 fließt. Die Stromrichtungen 43 in benachbarten Abschnitten der Senderwindungsanordnung 40 sind dabei aufgrund der Schlangenlinienform der entsprechenden Senderleiterbahnen jeweils entgegengesetzt gerichtet.

Fig. 6 zeigt einen Längsschnitt einer erfindungsgemäßen Positionsmessvorrichtung 10. Die Abtastvorrichtung 30 ist mit geringem Abstand zur Maßverkörperung 20 angeordnet, so dass die Stege 23 und die Durchbrüche 22 derselben das Sendefeld der Senderwindungsanordnung maximal beeinflussen können.

Die Abtastvorrichtung ist in Form mehrerer Schichten 31; 32; 33: 35 aufgebaut, die in einem Dünnschichtverfahren hergestellt werden. Hierzu wird insbesondere auf die DE 10 2007 009 994 A1 verwiesen, die hiermit in vollem Umfang in Bezug genommen und zum Inhalt der vorliegenden Anmeldung gemacht wird. Die Abtastvorrichtung 30 umfasst insgesamt zwei Schichten 31; 32, die mit Leiterbahnen versehen sind. In der ersten Schicht 31 sind die Leiterbahnen gemäß den Figuren 2 und 4 angeordnet, während in der zweiten Schicht 32 die Leiterbahnen gemäß der Figur 3 angeordnet sind. Die beiden Schichten 31; 32 sind von insgesamt drei Isolierschichten 33 umgeben, so dass sie von der Umgebung und gegenseitig elektrisch isoliert sind. Die mittlere Isolierschicht 34 wird dabei von den oben mehrfach angesprochenen Durchkontaktierungen durchsetzt, um die Leiterbahnen sinnvoll miteinander zu verbinden.

Auf der von der Maßverkörperung 20 abgewandten Seite der Abtastvorrichtung 30 ist darüber hinaus eine Ferritschicht 35 vorgesehen, um die Sender- und die Empfängerwindungsanordnung vor Umgebungseinflüssen abzuschirmen.

Bezugszeichenliste

| | |
|---|---|
| p | Periodenlänge der Maßverkörperung |
| q | Periodenlänge der Senderwindungsanordnung |
| 10 | Positionsmessvorrichtung |
| 11 | Messrichtung |
| 20 | Maßverkörperung |
| 21 | Metallband |
| 22 | Durchbruch |
| 23 | Steg |
| 30 | Abtastvorrichtung |
| 31 | erste Schicht |
| 32 | zweite Schicht |
| 33 | Isolierschicht |
| 34 | mittlere Isolierschicht |
| 35 | Ferritschicht |
| 36 | Anschlussbereich |
| 40 | Senderwindungsanordnung |
| 41 | Spiegelachse |
| 42a, b | Anschluss der Senderwindungsanordnung |
| 43 | Stromrichtung |
| 44 | magnetische Feldlinie |
| 45 | magnetische Flussrichtung |
| 46a, f | äußere Senderfläche |
| 46b - e | mittlere Senderfläche |
| 48 | kurze Rechteckseite der Senderfläche |
| 49 | erste Gruppe von schlangenlinienartigen Senderleiterbahnen |
| 50a-e | schlangenlinienartige Senderleiterbahn der ersten Gruppe |
| 51 | zweite Gruppe von schlangenlinienartigen Senderleiterbahnen |
| 52a-e | schlangenlinienartige Senderleiterbahn der zweiten Gruppe |
| 53 | Kreuzungsstelle |
| 54a - h | Durchkontaktierung |
| 60 | Empfängerwindungsanordnung |
| 61 | Sinus-Gruppe |
| 62a, b | Anschluss der Sinus-Gruppe |
| 63 | Cosinus-Gruppe |
| 64a, b | Anschluss der Cosinus-Gruppe |

| 65a - d | Empfängerspulenpaar |
|---|---|
| 66 | erste spiralförmige Spule |
| 67 | erste Durchkontaktierung |
| 68 | zweite spiralförmige Spule |
| 69 | zweite Durchkontaktierung |
| 70 | kurze Rechteckseite der spiralförmigen Spule |
| 71 | Abstand zwischen erster und zweiter Spule |
| 72 | Verbindungsleiterbahn |

**Patentansprüche**

1. Positionsmesseinrichtung (10) umfassend eine sich in eine Messrichtung (11) erstreckende Maßverkörperung (20) und eine Abtastvorrichtung (30), die in Messrichtung (11) beweglich gegenüber der Maßverkörperung (20) ist, wobei die Abtastvorrichtung (30) eine planare Senderwindungsanordnung (40) mit wenigstens einer Senderleiterbahn (50a - 50e; 52a - 52e) umfasst, die derart gewunden ist, dass die Senderwindungsanordnung (40) mehrere Senderflächen (46a - 46f) begrenzt, die periodisch entlang der Messrichtung (11) angeordnet sind, wobei benachbarte Senderflächen eine entgegen gesetzte magnetische Flussrichtung (45) aufweist, wenn durch die Senderleiterbahn Strom fließt, wobei die Abtastvorrichtung (30) weiter eine planare Empfängerwindungsanrodung (60) umfasst, die aus wenigstens einem Empfängerspulenpaar (65a - 65d) besteht, das zwei spiralförmige Spulen (66; 67) umfasst, die differentiell zusammengeschaltet sind, wobei das Empfängerspulenpaar innerhalb einer einzigen Senderfläche (46a - 46f) angeordnet ist, wobei die Maßverkörperung (20) sich in Messrichtung (11) periodisch ändernde elektromagnetische Eigenschaften aufweist, welche dazu geeignet sind, die induktive Kopplung zwischen der Senderwindungsanordnung (40) und der Empfängerwindungsanordnung (60) zu ändern, wenn sich die Abtastvorrichtung (30) gegenüber der Maßverkörperung (20) in Messrichtung (11) bewegt, **dadurch gekennzeichnet, dass** die Senderwindungsanordnung (40) eine erste und eine zweite Gruppe (49; 51) mit mehreren Senderleiterbahnen (50a - 50e; 52a - 52e) aufweist, wobei die Senderleiterbahnen einer Gruppe jeweils schlangenlinienartig mit geringem Abstand parallel zueinander verlaufen, wobei sich die Senderleiterbahnen der beiden Gruppen derart kreuzen, dass sie die Senderflächen begrenzen, wobei zwischen zwei benachbarten Kreuzungsstellen (53) jeweils eine einzige Senderfläche (46a - 46f) angeordnet ist.

2. Positionsmesseinrichtung nach Anspruch 1, **dadurch gekennzeichnet, dass** jeweils eine Senderleiterbahn der ersten und der zweiten Gruppe am Ende leitend zu einer Senderleiterbahnwindung verbunden sind, wobei wenigstens zwei Senderleiterbahnwindungen parallel geschalten sind, wobei wenigstens zwei Senderleiterbahnwindungen in Reihe geschaltet sind.

3. Positionsmesseinrichtung nach einem der vorstehenden Ansprüche, **dadurch gekennzeichnet, dass** mehrere Empfängerspulenpaare (65a - 65d) vorgesehen sind, wobei in jeder Senderfläche (46a - 46f) höchstens ein Empfängerspulenpaar angeordnet ist.

4. Positionsmesseinrichtung nach einem der vorstehenden Ansprüche, **dadurch gekennzeichnet, dass** in den Senderflächen (46a; 46f) an beiden Enden der Senderwindungsanordnungen (40) keine Empfängerspulenpaare angeordnet sind.

5. Positionsmesseinrichtung nach einem der vorstehenden Ansprüche, **dadurch gekennzeichnet, dass** wenigstens zwei Gruppen (61; 63) von Empfängerspulenpaaren (65a - 65d) vorgesehen sind, wobei alle Empfängerspulenpaare einer Gruppe in Reihe geschaltet sind.

6. Positionsmesseinrichtung nach Anspruch 5 rückbezogen auf Anspruch 4, **dadurch gekennzeichnet, dass** genau zwei Gruppen (61; 63) von Empfängerspulenpaaren (65a - 65d) vorgesehen sind, wobei die Empfängerspulenpaare der beiden Gruppen in Messrichtung (11) abwechselnd angeordnet sind, und wenn die Periodenlänge der Maßverkörperung (20) mit p und die Periodenlänge der Senderwindungsanordnung (40) mit q bezeichnet wird, wobei der Zusammenhang

$$q = n \times p + m \times p/4$$

besteht, wobei n eine ganze Zahl ist, für die gilt n ≥ 1, und wobei m eine ungerade ganze Zahl ist, für die gilt m ≥ 1.

7. Positionsmesseinrichtung nach einem der vorstehenden Ansprüche, **dadurch gekennzeichnet, dass** alle Senderflächen (46a - 46f) untereinander im Wesentlichen gleich ausgeführt sind, wobei die Empfängerspulenpaare (65a - 65d) ebenfalls untereinander im Wesentlichen gleich ausgeführt sind.

8. Positionsmesseinrichtung nach einem der vorstehenden Ansprüche, **dadurch gekennzeichnet, dass** die Senderflächen (46a - 46f) im Wesentlichen rechteckig ausgeführt sind, wobei die kurze Rechteckseite (48) in Messrichtung (11) angeordnet ist.

9. Positionsmesseinrichtung nach Anspruch 8, **dadurch gekennzeichnet, dass** die beiden Spulen (66; 68) eines Empfängerspulenpaares (65a - 65d) im Wesentlichen rechteckig ausgeführt und unmittelbar nebeneinander angeordnet sind, wobei die kurzen Rechteckseiten (70) in Messrichtung fluchtend verlaufen.

10. Positionsmesseinrichtung nach einem der vorstehenden Ansprüche, **dadurch gekennzeichnet, dass** die Sender- und die Empfängerwindungsanordnung (40; 60) in mehreren elektrisch voneinander isolierten Schichten (31; 32) angeordnet sind, wobei die erste und die zweite Gruppe (49; 51) von schlangenlinienartigen Leiterbahnen (50a - 50e; 52a - 52e) jeweils in wenigstens einer gesonderten Schicht (31; 32) angeordnet sind.

11. Positionsmesseinrichtung nach Anspruch 10, **dadurch gekennzeichnet, dass** die Empfängerspulenpaare (65a - 65d) über Verbindungsleiterbahnen (72) miteinander zusammengeschaltet sind, wobei die Verbindungsleiterbahnen (72) in der selben Schicht (32) angeordnet sind, wie eine der Gruppen (49) von schlangenlinienartigen Leiterbahnen.

12. Positionsmesseinrichtung nach Anspruch 11, **dadurch gekennzeichnet, dass** wenigstens ein Empfängerspulenpaar (65a-65d) in derselben Schicht (31) angeordnet ist wie die andere Gruppe (51) von schlangenlinienartigen Leiterbahnen.

13. Positionsmesseinrichtung nach einem der vorstehenden Ansprüche, **dadurch gekennzeichnet, dass** die Maßverkörperung (20) von einem Metallband gebildet wird, das mit einer Vielzahl von periodisch angeordneten Durchbrüchen (22) oder Ausnehmungen versehen ist.

**Claims**

1. Position measuring device (10) comprising a material measure (20) that extends in a measurement direction (11) and a scanning apparatus (30) that can move relative to the material measure (20) in a measurement direction (11), wherein the scanning apparatus (30) comprises a planar transmitter turn arrangement (40) having at least one transmitter conductor track (50a-50e; 52a-52e), which is wound such that the transmitter turn arrangement (40) bounds a plurality of transmitter surfaces (46a-46f) that are arranged periodically along the measurement direction (11), wherein adjacent transmitter surfaces have an opposite magnetic flux direction (45) when current flows through the transmitter conductor track, wherein the scanning apparatus (30) also comprises a planar receiver turn arrangement (60) that comprises at least one receiver coil pair (65a-65d) that comprises two spiral coils (66; 67) that are differentially interconnected, wherein the receiver coil pair is arranged within a single transmitter surface (46a-46f), wherein the material measure (20) has, in a measurement direction (11), periodically changing electromagnetic properties that are suited to changing the inductive coupling between the transmitter turn arrangement (40) and the receiver turn arrangement (60) when the scanning apparatus (30) moves relative to the material measure (20) in the measurement direction (11), **characterized in that** the transmitter turn arrangement (40) has a first and a second group (49; 51) with a plurality of transmitter conductor tracks (50a-50e; 52a-52e), wherein the transmitter conductor tacks of a group each run parallel to one another at a short interval in the manner of a wavy line, wherein the transmitter conductor tracks of the two groups cross one another such that they bound the transmitter surfaces, with a respective single transmitter surface (46a-46f) being arranged between two adjacent crossing points (53).

2. Position measuring device according to Claim 1, **characterized in that** a respective transmitter conductor track from the first and second groups have their ends conductively connected to form a transmitter conductor track turn, wherein at least two transmitter conductor track turns are connected in parallel, with at least two transmitter conductor track turns being connected in series.

3. Position measuring device according to either of the preceding claims, **characterized in that** a plurality of receiver coil pairs (65a-65d) are provided, wherein each transmitter surface (46a-46f) has no more than one receiver coil pair arranged in it.

4. Position measuring device according to one of the preceding claims, **characterized in that** the transmitter surfaces (46a; 46f) at both ends of the transmitter turn arrangements (40) have no receiver coil pairs arranged in them.

5. Position measuring device according to one of the preceding claims, **characterized in that** at least two groups (61; 63) of receiver coil pairs (65a-65d) are provided, wherein all the receiver coil pairs of a group are connected in series.

**6.** Position measuring device according to Claim 5 with reference back to Claim 4, **characterized in that** precisely two groups (61; 63) of receiver coil pairs (65a-65d) are provided, wherein the receiver coil pairs of the two groups are arranged alternately in a measurement direction (11), and, if the period length of the material measure (20) is denoted by p and the period length of the transmitter turn arrangement (40) is denoted by q, the relationship

$$q = n \times p + m \times p/4$$

exists, where n is an integer for which $n \geq 1$ applies, and where m is an odd integer for which $m \geq 1$ applies.

**7.** Position measuring device according to one of the preceding claims, **characterized in that** all the transmitter surfaces (46a-46f) are of essentially the same design among one another, wherein the receiver coil pairs (65a-65d) are likewise of essentially the same design among one another.

**8.** Position measuring device according to one of the preceding claims, **characterized in that** the transmitter surfaces (46a-46f) are of essentially rectangular design, wherein the short rectangle side (48) is arranged in the measurement direction (11).

**9.** Position measuring device according to Claim 8, **characterized in that** the two coils (66; 68) of a receiver coil pair (65a-65d) are of essentially rectangular design and are arranged directly next to one another, wherein the short rectangle sides (70) run in alignment in the measurement direction.

**10.** Position measuring device according to one of the preceding claims, **characterized in that** the transmitter and receiver turn arrangements (40; 60) are arranged in a plurality of layers (31; 32) that are electrically insulated from one another, wherein the first and second groups (49; 51) of wavy linear conductor tracks (50a-50e; 52a-52e) are each arranged in at least one separate layer (31; 32).

**11.** Position measuring device according to Claim 10, **characterized in that** the receiver coil pairs (65a-65d) are interconnected by means of connecting conductor tracks (72), wherein the connecting conductor tracks (72) are arranged in the same layer (32) as one of the groups (49) of wavy linear conductor tracks.

**12.** Position measuring device according to Claim 11, **characterized in that** at least one receiver coil pair (65a-65d) is arranged in the same layer (31) as the other group (51) of wavy linear conductor tracks.

**13.** Position measuring device according to one of the preceding claims, **characterized in that** the material measure (20) is formed by a metal strip that is provided with a multiplicity of periodically arranged perforations (22) or recesses.

**Revendications**

**1.** Dispositif de mesure de position (10) comprenant un étalon de mesure (20) s'étendant dans la direction de mesure (11) et un dispositif de balayage (30) qui est mobile dans la direction de mesure (11) par rapport à l'étalon de mesure (20), dans lequel le dispositif de balayage (30) comprend un système d'enroulement émetteur plan (40) comportant au moins un trajet conducteur d'émission (50a - 50e ; 52a - 52e) qui est enroulée de manière à ce que le système d'enroulement d'émission (40) délimite plusieurs surfaces d'émission (46a - 46f) qui sont disposées périodiquement dans la direction de mesure (11), les surfaces d'émission voisines présentant une direction de flux magnétique (45) orientée en sens opposé lorsqu'un courant passe à travers la piste conductrice d'émission, dans lequel le dispositif de balayage (30) comprend en outre un système d'enroulement de réception plan (60) qui est constitué d'au moins une paire de bobines de réception (65a - 65d), qui comprend deux bobines hélicoïdales (66 ; 67) connectées l'une à l'autre de manière différentielle, la paire de bobines de réception étant disposée en deçà d'une surface d'émission unique (46a - 46f), dans lequel l'étalon de mesure (20) présente des propriétés électromagnétiques variant périodiquement dans la direction de mesure (11), qui sont adaptées à modifier le couplage par induction entre le système d'enroulement d'émission (40) et le système d'enroulement de réception (60) lorsque le dispositif de balayage (30) se déplace dans la direction de mesure (11) par rapport à l'étalon de mesure (20), **caractérisé en ce que** le système d'enroulement d'émission (40) présente des premier et second groupes (49 ; 51) comportant de multiples trajets conducteurs d'émission (50a - 50e ; 52a - 52e), dans lequel les trajets conducteurs d'émission d'un groupe s'étendant respectivement parallèlement l'un à l'autre selon un trajet sinueux en étant séparés d'un petit espace, dans lequel les trajets conducteurs d'émission des deux groupes se coupent de manière à délimiter les surfaces d'émission, une surface d'émission unique respective (46a - 46f) étant disposée entre deux positions d'intersection voisines (53).

2. Dispositif de mesure de position selon la revendication 1,
   **caractérisé en ce qu'**un trajet conducteur d'émission respectif des premier et second groupes est relié de manière conductrice par une extrémité à un enroulement de trajet conducteur d'émission, au moins deux enroulements de trajets conducteurs d'émission étant connectés en parallèle, et au moins deux enroulements de trajets conducteurs d'émission étant connectés en série.

3. Dispositif de mesure de position selon l'une des revendications précédentes,
   **caractérisé en ce qu'**il est prévu une pluralité de paires de bobines de réception (65a - 65d), au plus une paire de bobines de réception étant disposée dans chaque surface d'émission (46a -46f).

4. Dispositif de mesure de position selon l'une des revendications précédentes,
   **caractérisé en ce qu'**aucune paire de bobines de réception n'est disposée dans les surfaces d'émission (46a ; 46f) aux deux extrémités des systèmes d'enroulement d'émission (40).

5. Dispositif de mesure de position selon l'une des revendications précédentes,
   **caractérisé en ce qu'**il est prévu au moins deux groupes (61 ; 63) de paires de bobines de réception (65a-65d), toutes les paires de bobines de réception d'un groupe étant connectées en série.

6. Dispositif de mesure de position selon la revendication 5 lorsqu'elle dépend de la revendication 4,
   **caractérisé en ce qu'**il est prévu au moins deux groupes (61 ; 63) de paires de bobines de réception (65a-65d), dans lequel les paires de bobines de réception des deux groupes sont disposées de manière alternée dans la direction de mesure (11), et lorsque la longueur de la période de l'étalon de mesure (20) est désignée par p, et lorsque la longueur de la période du système d'enroulement d'émission (40) est désignée par q, l'équation suivante :

$$q = n \times p + m \times p/4$$

est vérifiée, où n est un nombre entier tel que n ≥ 1, et où m est un nombre entier impair tel que m ≥ 1.

7. Dispositif de mesure de position selon l'une des revendications précédentes,
   **caractérisé en ce que** toutes les surfaces d'émission (46a - 46f) sont réalisées de manière sensiblement identique les unes aux autres, les paires de bobines de réception (65a - 65d) étant également réalisées de manière sensiblement identique les unes aux autres.

8. Dispositif de mesure de position selon l'une des revendications précédentes,
   **caractérisé en ce que** les surfaces d'émission (46a - 46f) sont réalisées de manière sensiblement rectangulaire, le côté court du rectangle (48) étant disposé dans la direction de mesure (11).

9. Dispositif de mesure de position selon la revendication 8,
   **caractérisé en ce que** les deux bobines (66 ; 68) d'une paire de bobines de réception (65a - 65d) sont réalisées de manière sensiblement rectangulaire et sont disposées de manière adjacente les unes aux autres, les côtés courts du rectangle (70) s'étendant de manière alignée dans la direction de mesure.

10. Dispositif de mesure de position selon l'une des revendications précédentes,
    **caractérisé en ce que** les systèmes d'enroulement d'émission et de réception (40 ; 60) sont disposés dans une pluralité de couches (31 ; 32) électriquement isolées les unes des autres, les premier et second groupes (49 ; 51) de trajets conducteurs sinueux (50a - 50e ; 52a - 52e) étant respectivement disposés dans au moins une couche distincte (31 ; 32).

11. Dispositif de mesure de position selon la revendication 10,
    **caractérisé en ce que** la paire de bobines de réception (65a - 65d) sont connectées l'une à l'autre par l'intermédiaire de trajets conducteurs de liaison (72), les trajets conducteurs de liaison (72) étant disposés dans la même couche (32) que l'un des groupes (49) de trajets conducteurs sinueux.

12. Dispositif de mesure de position selon la revendication 11,
    **caractérisé en ce qu'**au moins une paire de bobines de réception (65a - 65d) est disposée dans la même couche (31) que l'autre groupe (51) de trajets conducteurs sinueux.

13. Dispositif de mesure de position selon l'une des revendications précédentes,
    **caractérisé en ce que** l'étalon de mesure (20) est constitué d'une bande métallique qui est munie d'une pluralité de traversées (22) ou d'évidements disposés périodiquement.

Fig. 1

Fig. 2

Fig. 3

Fig. 4

EP 2 302 328 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1164358 B1
- US 5804963 A
- DE 102007009994 A1